Europäisches Patentamt

European Patent Office

Office européen des brevets

(19)

(11) Veröffentlichungsnummer: **0 270 879 B1**

# EUROPÄISCHE PATENTSCHRIFT

(12)

(45) Veröffentlichungstag der Patentschrift: **06.05.92**

(21) Anmeldenummer: **87116857.1**

(22) Anmeldetag: **14.11.87**

(51) Int. Cl.5: **C02F 1/32**, C02F 9/00,
C02F 1/78, C02F 1/48

(54) **Verfahren und Vorrichtung zur Entkeimung von wässrigen Medien, insbesondere Trinkwasser.**

(30) Priorität: **17.11.86 AT 3045/86**

(43) Veröffentlichungstag der Anmeldung:
**15.06.88 Patentblatt 88/24**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
WO-A-83/02937      DE-A- 2 003 989
DE-A- 2 856 537      DE-A- 3 309 021
DE-A- 3 441 535      US-A- 3 767 545
US-A- 4 563 286

(73) Patentinhaber: **Joklik, Otto**
**Gersthofer Strasse 120**
**A-1180 Wien(AT)**

(72) Erfinder: **Joklik, Otto**
**Gersthofer Strasse 120**
**A-1180 Wien(AT)**

(74) Vertreter: **Holzer, Walter, Dipl.-Ing. et al**
**Patentanwälte, Dipl.-Ing. Dr. techn. Schütz**
**Alfred, Dipl.-Ing. Holzer Walter, Dipl.-Ing.**
**Pfeifer Otto, Fleischmanngasse 9**
**A-1040 Wien(AT)**

**Beschreibung**

Die Erfindung betrifft ein Verfahren und ein Gerät zur Entkeimung von wäßrigen Medien, insbesondere Trinkwasser, mittels ultravioletter Strahlung.

Die Entkeimungswirkung von UV-Strahlen ist seit langem bekannt. Es wird beispielsweise auf die US-A-3,551.091, die DE-A-34 41 535, die DE-A-28 51 013 und die DE-A-23 27 084 verwiesen.

Der Erfindung liegt die Aufgabe zugrunde, eine Verbesserung des Wirkungsgrades der Aufbereitung und insbesondere Entkeimung von wäßrigen Medien zu erzielen.

Diese Aufgabe wird erfindungsgemäß dadurch gelöst, daß die UV-Bestrahlung des wäßrigen Mediums innerhalb eines Magnetfeldes erfolgt. Durch die gleichzeitige Einwirkung von UV-Strahlen geeigneter Wellenlänge und magnetischer Felder wird eine verbesserte Reinigung des wäßrigen Mediums erzielt.

Aus der DE-A-34 41 535 ist eine Einrichtung zur Trinkwasser-Entkeimung mittels UV-Strahlen bekannt, wobei die Einrichtung zur Erzeugung von UV-Strahlen in einem Quarzglasrohr angeordnet ist, welches von einer Leitvorrichtung koaxial umgeben ist, die das wäßrige Medium entlang der im wesentlichen vollständigen Wirklänge des Quarzglasrohres leitet.

Ein zur Durchführung des erfindungsgemäßen Verfahrens bestimmtes Gerät dieser Art zeichnet sich gemäß der Erfindung dadurch aus, daß die Einrichtung zur Erzeugung von UV-Strahlen von mindestens einem koaxial zu ihr ausgerichteten ringförmigen Permanentmagnet umgeben ist und die Leitvorrichtung vorzugsweise auch den ringförmigen Permanentmagnet koaxial umgibt. Bei größeren, vorzugsweise für den stationären Einsatz bestimmten Geräten kann das Magnetfeld auch mittels eines oder mehrerer Elektromagnete erzielt werden. Die Zahl der Magnete kann in Abhängigkeit von ihrer Stärke und Anordnung variieren.

Bevorzugt besteht die Einrichtung zur Erzeugung des Magnetfeldes aus drei bis zehn Permanentmagneten, wobei die axiale Erstreckung der Permanentmagnete vorzugsweise mindestens 3 mm und in der Regel 5 bis 10 mm beträgt.

Die Entkeimungswirkung des erfindungsgemäßen Verfahrens kann durch Ozonisierung des wäßrigen Mediums noch erhöht werden. Das erfindungsgemäße Gerät kann deshalb eine Einrichtung zur Ozonisierung des wäßrigen Mediums aufweisen, die vorzugsweise das Ozon verarbeitet, das bei der UV-Bestrahlung des wäßrigen Mediums entsteht. Bei einer bevorzugten Ausführungsform ist diese Ozonisierungs-Einrichtung den Einrichtungen zur Erzeugung der UV-Strahlen und des Magnetfeldes nachgeordnet, so daß das wäßrige Medium zunächst der UV-Strahlung und dem Magnetfeld ausgesetzt und erst anschließend ozonisiert wird. Die Ozonisierung kann mit Vorteil auch verbunden sein mit der Wirkung eines weiteren Magnetfeldes, zu dessen Erzeugung die Ozonisierungs-Einrichtung eine gesonderte Einrichtung zur Erzeugung eines Magnetfeldes aufweisen kann, die vorzugsweise ebenfalls aus wenigstens einem Permanentmagneten besteht.

Die Entkeimungswirkung des erfindungsgemäßen Verfahrens kann ferner dadurch erhöht werden, daß das zu entkeimende Medium je nach Ausgangstemperatur abgekühlt oder erwärmt wird. Das Gerät zur Durchführung des erfindungsgemäßen Verfahrens weist deshalb mit Vorteil eine Vorrichtung zur wahlweisen Kühlung oder Erwärmung des wäßrigen Mediums auf, die mit der Ozonisierungs-Einrichtung gegebenenfalls kombiniert sein kann.

Das Gerät zur Durchführung des erfindungsgemäßen Verfahrens kann an eine Druckleitung angeschlossen werden, die von dem zu entkeimenden wäßrigen Medium durchflossen wird, so daß das wäßrige Medium durch das Gerät gefördert wird. Zur Erzeugung eines Druckes kann das Gerät auch eine vorzugsweise manuell betätigbare Pumpe aufweisen, die insbesondere in den Fällen zum Einsatz gebracht werden kann, in denen portionsweise gearbeitet werden soll, also jeweils nur eine begrenzte Flüssigkeitsmenge entkeimt und ausgegeben werden soll.

Das erfindungsgemäße Gerät kann eine netzunabhängige Stromquelle (Batterie, Akkumulator, Solarzelle usw.) aufweisen, so daß mindestens die UV-Quelle unabhängig vom Stromnetz, und damit das gesamte Gerät ohne externe Stromzufuhr, beispielsweise auch in unwegsamem Gelände, eingesetzt werden kann.

Die zur Erzeugung des Magnetfeldes vorgesehenen ringförmigen Permanentmagnete sind vorzugsweise so bemessen und angeordnet, daß sie an ihren Innen- und/oder Außenumfang vom wäßrigen Medium durch- bzw. umströmbar sind. Bei einer bevorzugten Ausführungsform sind ringförmige Permanentmagnete vorgesehen, die radial so bemessen sind, daß sie abwechselnd innen durchströmt und außen umströmt werden, so daß das zu entkeimende wäßrige Medium während des Entkeimungsvorganges zu ständiger Richtungsänderung gezwungen wird, die eine starke Vermischung zur Folge hat. Die Magnete können gleichgerichtet angeordnet sein, so daß ein Südpol einem Nordpol zugerichtet ist. Sollen inhomogene Felder durchströmt werden, dann sind sie vorzugsweise gegensinnig, d.h. Südpol gegen Südpol und Nordpol gegen Nordpol, ausgerichtet.

Vorgenannte Leitvorrichtung kann mit Vorteil im wesentlichen rohrförmig ausgebildet sein und besteht vorzugsweise aus Quarzglas oder einem für UV-Strahlen durchlässigen Kunststoff, so daß das wäßrige Medium, das die Leitvorrichtung außen umströmt, einer weiteren UV-Bestrahlung ausgesetzt ist.

Das erfindungsgemäße Gerät kann ferner ein Filterelement aufweisen, das die Leitvorrichtung mit Abstand umgibt, wobei in dem Zwischenraum zwischen dem Gerätegehäuse und diesem Filterelement ein Einlaß für das wäßrige Medium mündet. Mit einem solchen Filterelement kann verhindert werden, daß grobe Verunreinigungen in den Geräteraum gelangen, der für die Entkeimung des wäßrigen Mediums durch UV-Bestrahlung und Magnetfeld bestimmt ist. Es ist auch möglich, vor oder im Anschluß an die UV-Licht- und Magnetfeld-Behandlung Filter, insbesondere Aktivkohlefilter, vorzusehen.

Die Erfindung ist besonders zur Aufbereitung von Wasser mit Trinkwasserqualität bestimmt und eignet sich auch für Wasser, das für die keimfreie Reinigung von Gegenständen vorgesehen ist. Es kann mit besonderem Vorteil auch zur Keimfreimachung von Getränken verwendet werden, die beispielsweise offen aufbewahrt und ausgegeben werden. Die Ausgabe des behandelten wäßrigen Mediums ist kontinuierlich mit und ohne Unterbrechungen möglich.

Die folgenden Beispiele zeigen, wie die Entkeimungswirkung durch Kombination der UV-Bestrahlung mit einem Magnetfeld erhöht werden kann.

Beispiel 1:

Wasserentkeimung mit einer UV-C-Strahlungsquelle 8 Watt, ohne Magnetfeld - Übersicht über die einzelnen Versuche und Ergebnisse -

| Testkeim | E. coli | | Ps. aeruginosa | |
|---|---|---|---|---|
| Versuchsreihe | (I) | (III) | (II) | (IV) |
| Testkeim-suspension KBE/ ml | $2 \times 10^8$ | $2 \times 10^9$ | $3 \times 10^7$ | $2 \times 10^9$ |
| Probewasser KBE/ ml | $2 \times 10^5$ | $2 \times 10^5$ | $7 \times 10^4$ | $3 \times 10^5$ |

Keimwachstum nach Entkeimung (KBE/ ml) mittels Membranfiltration von 100 ml und Bebrütung bei 37 °C 42 °C

| | 24 h | 48 h | 24 h | 48 h | 24 h | 48 h | 24 h | 48 h |
|---|---|---|---|---|---|---|---|---|
| Durchflußge-schwindigkeit | | | | | | | | |
| 1 1/min | 0 | 0 | 0 | 0 | 0 | 0 | 0 | 0 |
| 2 1/min | 0 | 0 | 0 | 0 | 0 | 0 | 0 | 0 |
| 4 1/min | 0 | 0 | 0 | 0 | 0 | 0 | 0 | 0 |
| 8 1/min | 0 | 0 | 0 | 0 | 0 | 0 | 0 | 0 |

Keimzahlen nach Entkeimung (KBE/ ml) mittels Gußplattenverfahren und Bebrütung bei 37 °C während 48 h

| | 0,1 ml | 1 ml | 0,1 ml | 1 ml | 0,1 ml | 1 ml | 0,1 ml | 1 ml |
|---|---|---|---|---|---|---|---|---|
| Durchflußge-schwindigkeit | | | | | | | | |
| 1 1/min | 0 | 0 | 0 | 0 | 0 | 0 | 0 | 0 |
| 2 1/min | 0 | 0 | 0 | 0 | 0 | 0 | 0 | 0 |
| 4 1/min | 0 | 0 | 0 | 0 | 0 | 0 | 0 | 0 |
| 8 1/min | 0 | 0 | 0 | 0 | 0 | 0 | 0 | 0 |

Die vollständige Entkeimungswirkung ist mit einer Durchflußgeschwindigkeit von 8 1/min begrenzt. Erhöht man die Durchflußgeschwindigkeit, dann werden Keime mitgerissen.

Beispiel 2:

Wasserentkeimung mit einer UV-C-Strahlungsquelle 6 Watt, ohne Magnetfeld - Übersicht über die einzelnen Versuche und Ergebnisse -

| Testkeim | E. coli | | Ps. aeruginosa | |
|---|---|---|---|---|
| Versuchsreihe | (I) | (III) | (II) | (IV) |
| Testkeim-suspension KBE/ ml | $2 \times 10^8$ | $2 \times 10^9$ | $3 \times 10^7$ | $2 \times 10^9$ |
| Probewasser KBE/ ml | $2 \times 10^5$ | $2 \times 10^5$ | $7 \times 10^4$ | $3 \times 10^5$ |

| | Keimwachstum nach Entkeimung (KBE/ ml) mittels Membranfiltration von 100 ml und Bebrütung bei | | | | | | | |
|---|---|---|---|---|---|---|---|---|
| | 37 °C | | | | 42 °C | | | |
| | 24 h | 48 h | 24 h | 48 h | 24 h | 48 h | 24 h | 48 h |
| Durchflußge-schwindigkeit | | | | | | | | |
| 8 l/min | 0 | 0 | 0 | 0 | 0 | 0 | 0 | 0 |
| 10 l/min | 0 | 0 | 0 | 0 | 0 | 0 | 0 | 0 |

| | Keimzahlen nach Entkeimung (KBE/ ml) mittels Gußplattenverfahren und Bebrütung bei | | | | | | | |
|---|---|---|---|---|---|---|---|---|
| | 37 °C während 48 h | | | | | | | |
| | 0,1 ml | 1 ml | 0,1 ml | 1 ml | 0,1 ml | 1 ml | 0,1 ml | 1 ml |
| Durchflußge-schwindigkeit | | | | | | | | |
| 8 l/min | 0 | 0 | 0 | 0 | 0 | 0 | 0 | 0 |
| 10 l/min | 0 | 0 | 0 | 0 | 0 | 0 | 0 | 0 |

Dieses Beispiel 2 zeigt, daß trotz einer Erniedrigung der Leistung der UV-C-Strahlungsquelle um 25 % die Durchflußgeschwindigkeit erheblich erhöht werden kann, ohne daß Keime mit ausgespült werden.

Beispiel 3:

Versuch mit dem Wasserentkeimungsgerät mit einer 6 Watt UVC-Strahlungsquelle in einem Magnetfeld

1. Keime: 16-stündige Bouillonkultur von E. coli
   16-stündige Boullionkultur von Ps. aeruginosa

2. Keimzugabe: in 20 ml Leitungswasser wurden 20 ml Keimsuspension zugegeben.
   Ein Versuch mit 1:10 verdünnter Keimsuspension und einmal mit unverdünnter Keimsuspension.
   KBE/1 ml aus dem Wasserbehälter nach Zugabe der Keimsuspension:

EP 0 270 879 B1

| | | |
|---|---|---|
| E. coli | (1:10 verdünnt) | $2 \times 10^5$ |
| E. coli | (unverdünnt) | $3 \times 10^7$ |
| Pseudomonas aeruginosa | (1:10) | $1 \times 10^4$ |
| Pseudomonas aeruginosa | (unverdünnt) | $1 \times 10^6$ |

3. Ergebnis: nach Durchlauf durch das Gerät, Durchlaufmenge 10 1/min
KBE/ 1 ml:

| | | |
|---|---|---|
| E. coli | (1:10) | 0 |
| E. coli | (unverdünnt) | 0 |
| Ps. aeruginosa | (1:10) | 0 |
| Ps. aeruginosa | (unverdünnt) | 2 |

Die erste Versuchsreihe wurde mit einem UV-Entkeimungsbrenner 8 Watt und mit einem Streufeldtransformator 220 V 50 Hz ohne Dauermagnete durchgeführt.

Die zweite Versuchsreihe wurde mit einem UV-Entkeimungsbrenner 6 Watt und mit einer 12 V 12 kHz Stromversorgung und mit Dauermagneten im UV-Strahlungsbereich durchgeführt.

Aus dem Vergleich der Versuchsergebnisse ist ersichtlich, daß mit einem 6 Watt UV-Entkeimungsbrenner in einem Magnetfeld siginifikant bessere Entkeimungsergebnisse erzielt werden können, als mit einem 8 Watt UV-Entkeimungsbrenner allein ohne Magnetfeld im UV-Strahlungsbereich.

Weitere Einzelheiten, Merkmale und Vorteile der Erfindung, die für sich alleine oder zu mehreren in Kombination bei einer Ausführungsform der Erfindung verwirklicht sein können, ergeben sich aus den Ansprüchen und der nachfolgenden Beschreibung bevorzugter Ausführungsformen der Erfindung im Zusammenhang mit der Zeichnung.

In der Zeichnung zeigen jeweils schematisch:

Fig. 1    einen Längsschnitt durch ein Gerät gemäß Erfindung;

Fig. 2    einen Längsschnitt durch ein weiteres Gerät gemäß Erfindung, und

Fig. 3    eine teilweise geschnittene Ansicht eines weiteren Gerätes gemäß Erfindung.

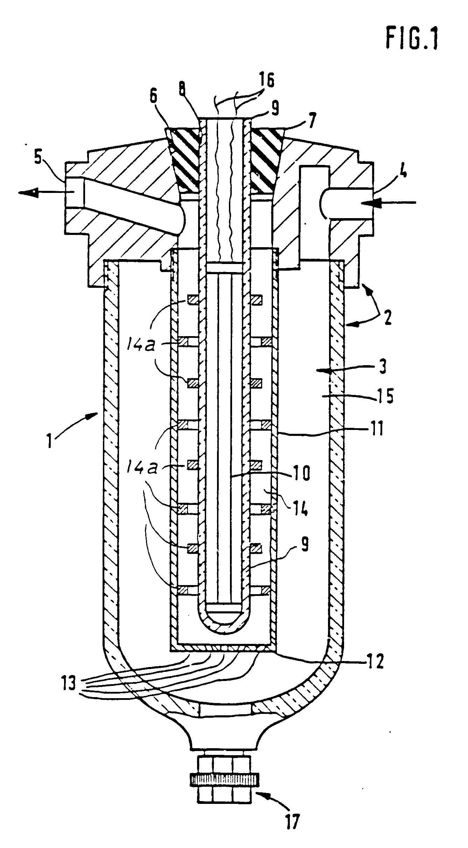

Das in Fig. 1 dargestellte Gerät 1 ist für die Entkeimung von Wasser und Getränken geeignet und weist ein Gehäuse 2 auf, dessen Innenraum 3 mit einem Wassereinlaß 4 und einem Wasserauslaß 5 verbunden ist. In eine konische Öffnung 6 des Gehäuses 2 ist ein Gummistopfen 7 mit einer mittleren Bohrung 8 eingesetzt. In der Bohrung 8 ist ein Quarzglasrohr 9 gehalten, das sich in den Innenraum 3 erstreckt und eine langgestreckte UV-Strahlungsquelle 10 koaxial aufnimmt.

In den Innenraum 3 erstreckt sich ferner ein in das Gehäuse 2 eingeschraubtes koaxiales Leitrohr 11, dessen Endwand 12 Richtöffnungen 13 für in das Leitrohr einströmende Wasser aufweist. Zwischen dem Leitrohr 11 und dem Quarzglasleitrohr 9 befindet sich ein Zwischenraum 14 und zwischen dem Leitrohr 11 und dem Gehäuse 2 ein Zwischenraum 15.

Die UV-Strahlungsquelle 10 wird durch elektrische Leitungen 16 mit Energie versorgt.

In dem Zwischenraum 14 befinden sich acht ringförmige Dauermagnete 14a, die von dem das Leitrohr 11 durchströmenden Wasser umströmt werden.

Das Gehäuse 2 ist an seinem untersten Punkt mit einem der Reinigung des Gerätes 1 dienenden Ablaß 17 versehen.

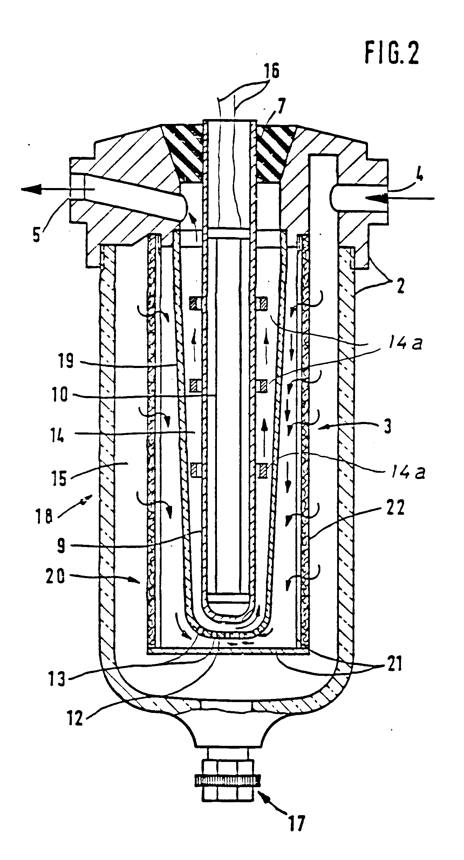

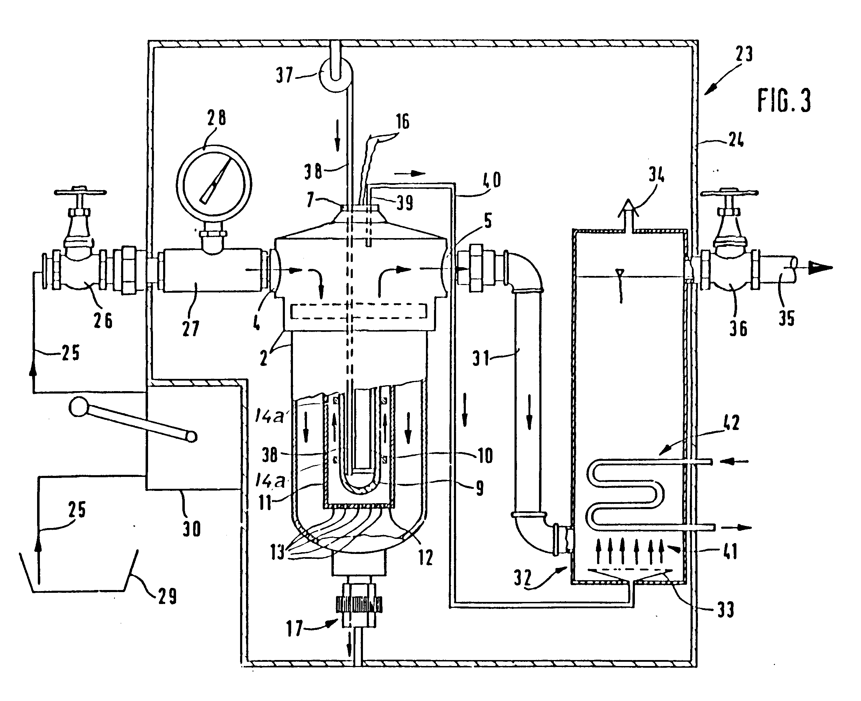

In den Fig. 2 und 3 sind Teile, die in Fig. 1 dargestellten Teilen entsprechen, mit entsprechenden Bezugszeichen versehen.

Fig. 2 zeigt ein abgewandeltes Gerät 18 zur Wasserentkeimung. Während die in Fig. 1 dargestellte, rohrförmige Leitvorrichtung aus einem Blechrohr 11 besteht, ist die dargestellte Leitvorrichtung 19 in Fig. 2 konisch ausgebildet und besteht aus Quarzglas. In dem Zwischenraum 15 zwischen dieser Leitvorrichtung und dem Gehäuse ist hier mit Abstand von dem Leitrohr 19 und dem Gehäuse 2 ein das Leitrohr 19 umgebendes Filterelement 20 angeordnet und oben in das Gehäuse 2 eingeschraubt. Das Filterelement 20 weist einen Stützkorb 21 auf, der in seinem Mantelbereich wasserdurchlässig ist und einen Hohlzylinder 22 aus Filtermaterial trägt. Das Gerät 18 wird in Richtung der in Fig. 2 eingetragenen Pfeile von dem zu entkeimenden Medium, zum Beispiel Wasser, durchströmt.

Fig. 3 zeigt ein tragbares Gerät 23 zur Wasserentkeimung. In ein Außengehäuse 24 dieses Gerätes 23 führt eine Leitung 25 für Rohwasser mit einem Handventil 26 und einem Magnetventil 27 mit daran angeschlossenem Manometer 28 zu dem Wassereinlaß des Gehäuses 2. Die Leitung 25 kann aus jeder beliebigen Rohwasserquelle gespeist werden. In die Leitung 25 ist eine an dem Außengehäuse 24 befestigte Handpumpe 30 eingeschaltet, die eine Förderung des Wassers durch das Gerät 23 hindurch auch dann ermöglicht, wenn ein elektrisches Netz als Energiespender nicht zur Verfügung steht.

6

Das UV-bestrahlte Wasser tritt aus dem Wasserauslaß 5 des Gehäuses 2 über eine Leitung 31 in einen in dem Außengehäuse 24 angeordneten Ozonisierbehälter 32 ein, der an seinem unteren Ende mit einem Düsenkopf 33 und an seinem oberen Ende mit einer Entlüftung 34 versehen ist. Das entkeimte Wasser verläßt den Ozonisierbehälter 32 durch eine Leitung 35, in der ein Handventil 36 angeordnet ist.

In dem Außengehäuse 24 ist ferner ein Verdichter 37 angeordnet, der Luft von außen ansaugt und durch ein Rohr 38 in den unteren Bereich eines Innenraumes des Quarzglasrohres 9 drückt. Von dort strömt die Luft entlang der UV-Strahlungsquelle 10 nach oben und wird dabei ozonisiert. Die ozonisierte Luft verläßt das Quarzglasrohr 9 durch ein Rohr 39, das über eine Leitung 40 mit dem Düsenkopf 33 des Ozonisierbehälters 32 verbunden ist. Die ozonisierte Luft verläßt den Düsenkopf 33 und perlt in Richtung der Pfeile 41 durch das in dem Ozonisierbehälter 32 anstehende UV-bestrahlte und entkeimte Wasser. Die Rohre 38 und 39 sind durch den Gummistopfen 7 abgedichtet hindurchgeführt.

Der Ozonisierbehälter 32 ist mit einer Temperiereinrichtung 42 versehen, die eine Kühlung oder Erwärmung des in dem Ozonisierbehälter 32 befindlichen entkeimten Wassers gestattet.

Das Magnetventil 27 kann so geschaltet sein, daß es bei Ausfall der elektrischen Energie für die UV-Strahlungsquelle 10 oder bei einem Defekt derselben automatisch schließt und damit das gesamte Gerät 23 selbsttätig stillsetzt, wodurch eine unbemerkte unzureichende Entkeimung des Rohwassers verhindert wird.

Die Leitvorrichtungen 11, 19 und der Stützkorb 21 für den Hohlzylinder 22 aus Filtermaterial können aus einem transparenten Material gefertigt sein, so daß eine optische Kontrolle der Funktionsfähigkeit des eingeschalteten Gerätes gegeben ist, da die sichtbare UV-Strahlung am Stützkorb 21 wahrgenommen werden kann.

Bei der Ausführungsform nach Fig. 1 sind insgesamt acht ringförmige Permanentmagnete 14a vorgesehen, die einander in der axialen Dicke entsprechen, in den sonstigen Abmessungen und in der Anordnung aber voneinander abweichen. Der eine Teil dieser Permanentmagnete 14a liegt an der Außenwand des Quarzglasrohres 9 an, während der andere Teil an der Innenwand der rohrförmigen Leitvorrichtung anliegt. Die Pole der Magnete sind gegensinnig zueinander ausgerichtet.

Bei der Ausführungsform nach Fig. 2 sind drei gleichsinnig ausgerichtete, ringförmige Permanentmagnete 14a vorgesehen, die so bemessen und angeordnet sind, daß zwischen ihnen und dem Quarzglasrohr 9 und der hier konisch ausgebildeten Leitvorrichtung 19 ein Abstand besteht, durch den jeweils Teile des zu entkeimenden Mediums hindurchströmen können.

Bei der Ausführungsform nach Fig. 3 sind der besseren Übersicht wegen nur zwei von drei ringförmigen Dauermagneten 14a dargestellt, die jeweils außen am Quarzglasrohr 9 anliegen, so daß sie vom wäßrigen Medium umströmt werden.

## Patentansprüche

1. Verfahren zur Entkeimung von wäßrigen Medien, insbesondere Trinkwasser, mittels ultravioletter Strahlung, dadurch gekennzeichnet, daß die UV-Bestrahlung des wäßrigen Mediums innerhalb eines Magnetfeldes erfolgt.

2. Gerät zur Durchführung des Verfahrens nach Anspruch 1, mit einer Einrichtung (10) zur Erzeugung von UV-Strahlen, die in einem Quarzglasrohr (9) angeordnet ist, und einer Leitvorrichtung (11, 19), die das Quarzglasrohr (9) koaxial umgibt und das wäßrige Medium entlang der im wesentlichen vollständigen Wirklänge des Quarzglasrohres (9) leitet, dadurch gekennzeichnet, daß die Einrichtung (10) zur Erzeugung von UV-Strahlen von mindestens einem koaxial zu ihr ausgerichteten ringförmigen Permanentmagnet (14a) umgeben ist und die Leitvorrichtung (11, 19) vorzugsweise auch den ringförmigen Permanentmagnet (14a) koaxial umgibt.

3. Gerät nach Anspruch 2, dadurch gekennzeichnet, daß die Einrichtung zur Erzeugung des Magnetfeldes aus drei bis zehn Permanentmagneten (14a) besteht, wobei die axiale Erstreckung der Permanentmagnete vorzugsweise mindestens 3 mm beträgt.

4. Gerät nach einem der Ansprüche 2 oder 3, dadurch gekennzeichnet, daß eine Einrichtung (33) zur Ozonisierung des wäßrigen Mediums vorgesehen ist, die vorzugsweise ebenfalls eine Einrichtung zur Erzeugung eines Magnetfeldes aufweist, die vorzugsweise aus mindestens einem Permanentmagnet besteht, der insbesondere ringförmig ausgebildet ist.

**5.** Gerät nach einem der Ansprüche 2 bis 4, dadurch gekennzeichnet, daß es eine Einrichtung (42) zur wahlweisen Kühlung oder Erwärmung des wäßrigen Mediums aufweist, die mit der Ozonisierungs-Einrichtung (33) vorzugsweise kombiniert ist.

**6.** Gerät nach einem der Ansprüche 2 bis 5, dadurch gekennzeichnet, daß es eine der Förderung des wäßrigen Mediums durch das Gerät dienende Pumpe (30) aufweist, die vorzugsweise manuell betätigbar ist, wobei das Gerät vorzugsweise eine mindestens für den Betrieb der Einrichtung zur Erzeugung von UV-Strahlen vorgesehene, netzunabhängige Stromquelle aufweist.

**7.** Gerät nach einem der Ansprüche 2 bis 6, dadurch gekennzeichnet, daß die ringförmigen Permanentmagnete (14a) an ihrem Innen- und/oder Außenumfang vom wäßrigen Medium durch- bzw. umströmbar sind.

**8.** Gerät nach einem der Ansprüche 2 bis 7, dadurch gekennzeichnet, daß die Pole der Magnete der Einrichtung zur Erzeugung des Magnetfeldes gegensinnig zueinander ausgerichtet sind.

**9.** Gerät nach einem der Ansprüche 2 bis 8, dadurch gekennzeichnet, daß die Leitvorrichtung im wesentlichen rohrförmig ausgebildet ist und aus Quarzglas oder einem für UV-Strahlen durchlässigen Kunststoff besteht, wobei vorzugsweise ein Filterelement (20) vorgesehen ist, das die Leitvorrichtung mit Abstand umgibt, wobei in dem Zwischenraum zwischen einem Gerätegehäuse (2) und dem Filterelement (20) ein Einlaß (4) für das wäßrige Medium mündet.

## Claims

**1.** Method for disinfecting aqueous mediums, especially drinking water, by means of ultraviolet radiation, characterized in that the ultraviolet irradiation of the aqueous medium is provided within a magnetic field.

**2.** Apparatus for carrying out the method according to claim 1, comprising a means (10) for producing ultraviolet radiation, which is arranged in a quartz glass tube (9), and a guide means (11, 19) coaxially surrounding the quartz glass tube and conducting the aqueous medium along the substantially total active length of the quartz glass tube (9), characterized in that the means (10) for producing the ultraviolet radiation is surrounded by at least one annular permanent magnet (14a) coaxially aligned therewith, and the guide means (11, 19) preferably also surrounding the permanent magnet (14a) coaxially,

**3.** Apparatus according to claim 2, characterized in that said magnetic field consists of three to ten permanent magnets (14a), the permanent magnets having an axial extension of preferably at least 3 mm.

**4.** Apparatus according to claim 2 or 3, characterized in that a means (33) for ozonizing the aqueous medium is provided for, which means preferably also comprises a means for producing a magnetic field, the latter means preferably consisting of at least one permanent magnet which in particular is of annular shape.

**5.** Apparatus according to one of the claims 2 to 4, characterized in that it comprises a means (42) for selectively cooling or heating the aqueous medium, which means is preferably combined with said ozonizing means (33).

**6.** Apparatus according to one of the claims 2 to 5, characterized in that it comprises a pump (30) for circulating the aqueous medium through the apparatus, which pump preferably is manually activable, the apparatus preferably comprising at least one mains-independent electrical power source for the activation of the means for producing the ultraviolet radiation.

**7.** Apparatus according to one of the claims 2 to 6, characterized in that the aqueous medium flows through and/or around the annular permanent magnets (14a) at the inner and/or outer periphery thereof.

**8.** Apparatus according to one of the claims 2 to 7, characterized in that the poles of the magnets of the means for producing the magnetic field are aligned oppositely to each other.

**9.** Apparatus according to one of the claims 2 to 8, characterized in that said guide means is substantially tubular and consists of quartz glass or a synthetic material transmissive for ultraviolet radiation, a filter element (20) being preferably provided which surrounds the guide means spaced thereof, an inlet (4) opening into the interspace between the apparatus housing (2) and the filter element (20).

**Revendications**

**1.** Procédé pour la désinfection des milieux aqueux, notamment de l'eau potable, au moyen du rayonnement aux ultraviolets, caractérisé en ce que le rayonnement UV du milieu aqueux s'effectue à l'intérieur d'un champ magnétique.

**2.** Appareil pour la réalisation du procédé selon la revendication 1, avec un dispositif (10) pour la production de rayons UV, lequel dispositif est agencé dans un tube de verre au quartz (9), et avec un système de guidage (11, 19) qui entoure coaxialement le tube de verre au quarts (9) et guide le milieu aqueux le long de la longueur efficace essentiellement complète du tube de verre au quartz (9), caractérisé en ce que le dispositif (10) pour la production de rayons UV est entouré au moins par un aimant permanent (14a) dirigé coaxialement vers celui-ci et le système de guidage (11, 19) entoure de préférence également l'aiment permanent annulaire (14a) coaxialement.

**3.** Appareil selon la revendication 2, caractérisé en ce que le dispositif pour la production du champ magnétique consiste en trois jusqu'à dix aimants permanents (14a), de telle sorte que l'extension axiale des aimants permanents est de préférence au moins égale à 3 mm.

**4.** Appareil selon l'une des revendications 2 ou 3, caractérisé en ce qu'il est prévu un dispositif (33) pour l'ozonisation du milieu aqueux, lequel de préférence comporte également un dispositif pour le production d'un champ magnétique, lequel dispositif consiste de préférence en au moins un aiment permanent qui présente notamment une configuration annulaire.

**5.** Appareil selon l'une des revendications 2 à 4, caractérisé en ce qu'il comporte un dispositif (42) pour le refroidissement ou le réchauffement sélectif du milieu aqueux, lequel est de préférence combiné avec le dispositif d'ozonisation (33).

**6.** Dispositif selon l'une des revendications 2 à 5, caractérisé en ce qu'il comporte une pompe (30) servant à débiter le milieu aqueux à travers l'appareil, pompe qui de préférence peut être actionnée manuellement, de telle sorte que l'appareil présente de préférence une source de courant électrique indépendante du réseau au moins pour le fonctionnement du dispositif servant à la production des rayons UV.

**7.** Appareil selon l'une des revendications 2 à 6, caractérisé en ce que les aimants permanents annulaires (14a) peuvent être traversés ou balayés sur leur périphérie intérieure et/ou extérieure par le milieu aqueux.

**8.** Appareil selon l'une des revendications 2 à 7, caractérisé en ce que les pôles des aimants du dispositif pour la production du champ magnétique sont dirigés dans le sens contraire les uns par rapport aux autres.

**9.** Appareil selon l'une des revendications 2 à 8, caractérisé en ce que le système de guidage est de conception essentiellement tubulaire et consiste en un verre au quartz ou en une matière synthétique laissant passer les rayons UV un élément filtrant (20) pouvant être de préférence prévu, élément filtrant qui entoure le système de guidage à une certaine distance, une entrée (4) pour le milieu aqueux débouchant dans l'espace intermédiaire entre le logement de l'appareil (2) et l'élément filtrant (20).

FIG.1

FIG.2

FIG.3

EP 0 270 879 B1